# EUROPEAN PATENT APPLICATION

(11) **EP 4 474 235 A1**
(43) Date of publication of application: **11.12.2024**
(21) Application number: 23178075.0
(22) Date of filing: 07.06.2023
(51) Int. Cl.: B60W 30/06, B62D 15/02, G08G 1/16

(54) **METHOD OF OPERATING A VEHICLE DURING A PARKING MANEUVER, PARKING MANEUVER SYSTEM, AND VEHICLE**

(71) Applicant: Ford Global Technologies, LLC, Dearborn, MI 48126 (US)
(72) Inventor: Jamnicki, Paul, 53111 Bonn (DE); Lazaridis, Elena, 50735 Köln (DE); Röber, Marc, 40223 Düsseldorf (DE); Vieten, Florian, 40670 Meerbusch (DE); Ochmanski, Andrew, Royal Oak, 48067 MI (US); Skiba, Karolina, Canton, 48187 MI (US); Ali, Shoaib, Windsor, ON, N9A 0A2 (CA)
(74) Representative: Markowitz, Markus

(57) **Abstract**

The present disclosure generally relates to a method (28, 38) of operating a vehicle (10) during a parking maneuver, a parking maneuver system (12), and a vehicle (10). The vehicle (10) comprises at least one sensor (18), steerable wheels (14), and a control device (16) which is connected to the sensor (18). The control device (16) is at least configured to provide a control signal for steering the steerable wheels (14) according to a set orientation following a planned path (82) of the parking maneuver. At least one curb (78) being arranged within the planned path (82) is detected using the at least one sensor (18). The parking maneuver is interrupted. An altered path (88, 90) of the parking maneuver is determined. The altered path (88, 90) comprises a protection margin between a location of the curb (78) and set locations (92, 94) at which steering of the steerable wheels (14) is planned. The parking maneuver is proceeded according to the altered path (88, 90).

## Description

The present disclosure generally relates to a method of operating a vehicle during a parking maneuver, an parking maneuver system, and a vehicle.

Vehicle parking systems are used to assist drivers in maneuvering out of or into available parking spaces. Depending on the detected environment, a path is planned to move the vehicle from a current position into the detected parking space or out of the space. If a curb is detected within the trajectory according to which the vehicle is supposed to move, current parking assist systems consider the detected curb by making use of its orientation.

Such systems then seek to determine a trajectory of the vehicle such that the end position of the maneuver provides a parallel alignment of the vehicle relative to the curb. Other systems consider the curb such that a protection margin is provided between the end position of the maneuver relative to the location of the curb to prevents the tires hitting the curb at all. In these parking-in maneuvers, the vehicle prevents to hit the curb at all. Accordingly, the available maneuvering space is limited.

US 11,318,928 B2 and US 11,104,327 B2 disclose generic vehicular automated parking systems which are able to consider a specialized trajectory having large hitting angles if a curb is detected to be located within the originally intended trajectory for leaving the parking space. US 2020/0231141 A1 discloses another generic park assist system. Optionally, user inputs may be considered during the execution of the maneuvering procedure.

US 2021/0269019 A1 discloses a generic parking assist system which considers a change of the moving sense of the vehicle during the parking maneuver to reach an intended end position of a trajectory.

However, known systems determine the trajectory of the vehicle independent of steering procedures of the wheels relative to the curb. Consequently, steering of the wheels may be executed while the wheels are in contact with the curb. This may potentially cause contact of the wheels or the rims thereof with the curb.

In addition, steering at the location of the curb usually influences the trajectory of the vehicle such that a set trajectory cannot be followed due to the interaction between the wheels and the curb. As a consequence, controlling of the vehicle is challenging to achieve which leads to an effective shortening of the available parking space.

Another issue with known systems relates to the detection of a curb *per se,* especially if the vehicle is keyed on while being located above a curb. After initialization, usual vehicle sensors, such as lidar systems, are not able to detect a curb being positioned beneath the vehicle which is possibly hit during a subsequent parking-out maneuver. In addition, the location of the curb may potentially be not detected with sufficient precision compared to the location of the vehicle as the sensors are not yet able to precisely determine the curb's location. In this regard, such sensors calibrate themselves during use of the vehicles. However, this generally requires certain driving actions to be carried out. Such imperfections again cause uncertainty to known systems which cannot be readily dealt with.

Accordingly, the objective technical problem to be solved may be considered to consist in overcoming or at least reducing the disadvantages according to the prior art. In particular, a need may be considered to exist for a method of operating a vehicle during an parking maneuver which provides a more convenient parking maneuver for passengers and which is gentle to the wheels such that their lifetime is enlarged.

The objective technical problem is solved by the subject matter according to the independent claims. Additional embodiments are indicated within the dependent claims and the following description, each of which, individually or in combination, may represent aspects of the disclosure. Some aspects of the present disclosure are presented with regard to methods, others with regard to respective devices. However, the features are correspondingly to be transferred vice versa.

A summary of certain embodiments disclosed herein is set forth below. It should be understood that these aspects are presented merely to provide a brief summary of these embodiments and that these aspects are not intended to limit the scope of this disclosure. This disclosure may encompass a variety of aspects that may not be set forth below.

According to an aspect of the present disclosure, a method of operating a vehicle during an parking maneuver is provided. The vehicle comprises at least one sensor, steerable wheels, and a control device which is connected to the sensor. The control device is at least configured to provide a control signal for steering the steerable wheels according to a set orientation following a planned path of the parking maneuver. The method comprises at least the following steps:
At least one curb being located within the planned path of the parking maneuver is detected using the at least one sensor and/or a vehicle-to-infrastructure communication.

The parking maneuver according to the planned path is interrupted.

An altered path of the parking maneuver is determined using a path planning algorithm. The altered path comprises a protection margin between a location of the curb and set locations at which steering of the steerable wheels is planned.

The parking maneuver is proceeded according to the altered path.

The present method provides several advantages over known methods. The so configured method provides the possibility to save the wheels from the interaction with the curb. As a protection margin is considered within the altered path, steering of the wheels is performed at locations having a distance relative to the location of the curb. Therefore, even if steering procedures are performed with regard to at least one wheel of the vehicle, such steering procedure cannot result in an unwanted interaction between the respective wheel and the curb. Accordingly, the lifetimes of the wheels and the respective rims are elongated. Moreover, as the steering actions are not performed while an interaction between the wheel and the curb takes place, the altered path of the maneuver can be followed more precisely. Therefore, deviations from the altered path of the maneuver are reduced. In addition, by circumventing steering actions while a wheel is interacting with a curb, sudden movements of the vehicle relative to the curb are prevented. Consequently, the comfort for passengers of the vehicle is enhanced as well. Put differently, the so configured method provides a step towards a more natural parking style. It increases the passengers' confidence in the parking maneuver functionality as the passengers realize that the underlying system can also handle special scenarios.

According to another aspect, an parking maneuver system for a vehicle is provided. The vehicle comprises steerable wheels. The parking maneuver system comprises at least one sensor and a control device which is connected to the sensor. The control device is at least configured to provide a control signal for steering the steerable wheels according to a set orientation following a planned path of the parking maneuver. The system is configured to:
- detect at least one curb being arranged within the planned path of the parking maneuver using the at least one sensor and/or a vehicle-to-infrastructure communication,
- interrupt the parking maneuver according to the planned path using the control device,
- determine an altered path of the parking maneuver using a path planning algorithm. Here, the altered path comprises a protection margin between a location of the curb and set locations at which steering of the steerable wheels is planned, and
- proceed the parking maneuver according to the altered path using the control device.

The parking maneuver system allows similar technical advantages to be achieved as described with regard to the above-explained method. In particular, the comfort for passengers of the vehicle is enhanced and the lifetimes of the wheels of the vehicle and respective rims are elongated. Moreover, the altered path of the parking maneuver can be followed with greater precision.

In some embodiments, the parking maneuver may be manually executed by a driver and the parking maneuver system may be configured to detect the curb being arranged within the planned path of the manually executed parking maneuver using the at least one sensor. In this case, the planed path represents the actual path along which the vehicle is moved based on the driver commands. In this regard, the parking maneuver system performs a surveillance functionality to prevent unwanted contact with a curb.

In an alternative, the parking maneuver system may comprise an assisted or even automated parking maneuver system.

In the following, for mere illustrative purposes, the parking maneuver system comprises an assisted parking maneuver system. However, the specific features explained in view of an assisted parking maneuver system are to be transferred correspondingly to an automated parking maneuver system or a parking maneuver system for manual parking maneuvers.

More particularly, within the present context, an assisted parking maneuver may be considered a functionality providing a predetermined path along which a vehicle is to be moved for entering or leaving a parking space. In particular, the functionality may provide predetermined steering movements and speed modifications of the vehicle. However, it may be required that a driver of the vehicle is still in charge of the primary user inputs for controlling the movement of the vehicle. For example, the assisted parking maneuver may require that a driver is still in physical contact with a steering wheel of the vehicle, even though an actual steering movement of the steering wheel may primarily be executed by an actuator controlled by the assisted parking maneuver functionality. Cumulatively or alternatively, the driver may be required to actively actuate a gas pedal of the vehicle for the parking maneuver to be executed. Put differently, without an actuation of a gas pedal by the driver, the vehicle may resist in a specific location. This means that the driver is still in charge of the primary controls of the vehicle while the planned path for leaving or entering a parking space is purported by the assisted parking maneuver functionality.

In some embodiments, the assisted parking maneuver functionality may also comprise an automated parking maneuver functionality. This means that a movement of the vehicle may be executed without an input of the driver during the movement. Optionally, an initial activation of the automated parking maneuver functionality may be required. After this activation, a movement of the vehicle along the planned path may be automatically executed including steering actions and speed variations of the vehicle. In this sense, the method may also be provided with regard to an automated parking maneuver. In addition, a respective automated parking maneuver system may be provided. Whether or not the functionality is automated or just assisted may for example depend on laws at the specific location.

Within the present context, the planned path of the assisted parking maneuver may be considered a trajectory which is determined for the vehicle entering or leaving a parking space. In this regard, obstacles such as curbs are not originally considered in view of the planned path. Put differently, the planned path is determined before an obstacle or curb is detected.

Optionally, paths, such as the planned path and the altered path comprise respective start locations and end locations between which the respective trajectory extends. While for parking-out maneuvers the start location may be located inside the parking space, for parking-in maneuvers the end-location may be located inside the parking space.

Within the present context, the set orientation may be considered an intended orientation of the steering wheels of the vehicle along which the steering wheels are desired to be oriented for performing a steering action of the vehicle once a movement of the vehicle takes place.

Optionally, the vehicle-to-infrastructure communication may comprise a communication device configured to communicate with external devices such as servers or traffic related guidance systems. The external devices may comprise information with regard to the presence of curbs or other obstacles. This information can be communicated to the vehicle using the vehicle-to-infrastructure. Accordingly, the vehicle is told

Within the present context, a curb may be considered a traversable obstacle desired to limit a portion of a road or a different moving ground of a vehicle, such as a parking area, a parking lane or the like. Generally, the curb may also represent any traversable obstacle which is located within the planned path of the assisted parking maneuver.

In some embodiments, only those curbs or obstacles may be considered which provide a height difference between a first height level and a second height level above a certain height threshold value. Consequently, obstacles which provide only little height differences may be neglected in view of the here described method. For example, the height threshold value may be at least 3 cm, preferably at least 5 cm, more preferably at least 7 cm, more preferably at least 10 cm.

Within the present context, interrupting the assisted parking maneuver may be considered halting a movement of the vehicle. In this regard, the control device may be coupled to a motor control of the vehicle. Upon detecting at least one curb being arranged within the planned path of the assisted parking maneuver, a control signal may be provided by the control device which causes the motor to reduce an output power. Alternatively or cumulatively, a control signal may be provided to a brake control as well such that at least one break device of the vehicle is actuated. Accordingly, a controlled breaking of the vehicle is achieved.

Optionally, the control device is coupled to a steering control of the vehicle. Accordingly, by providing a respective control signal from the control device to the steering control, a steering action may be performed.

In an alternative, the control device may also provide control signals such that the steerable wheels are directly controlled by the control device. For example, the control device may be directly coupled to steering devices (actuators) coupled to the steerable wheels.

Based on the control signal provided by the control device, steering action of the steerable wheels may be initiated.

In some embodiments, a movement of the vehicle is not necessarily stopped when interrupting the assisted parking maneuver. However, the movement of the vehicle may at least be slowed down when the assisted parking maneuver is interrupted. Generally, the vehicle may even continuously move during interrupting the assisted parking maneuver, determining the altered path, and proceeding the assisted parking maneuver according to the altered path. Whether or not the vehicle is slowed down or even stops primarily depends on the computing speed of the path planning algorithm.

Preferably, the altered path distinguishes from the planned path in at least one aspect regarding the respective underlying trajectories and actions which are taken along the trajectories. For example, the altered path may distinguish from the planned path with regard to locations at which steering actions are supposed to be performed. If the locations, at which steering actions are supposed to be carried out, are changed between the planned path and the altered path, as a consequence, the trajectories themselves cannot coincide with each other. Accordingly, at least a portion of the trajectory of the altered path is different from a corresponding portion of the trajectory of the planned path. For example, the corresponding portions may be located at a distance from each other. As a consequence, the trajectory of the altered path may be longer or even shorter than compared to the trajectory of the planned path.

In some embodiments, the protection margin represents a distance between the location of the curb at which a height difference occurs and a center location about which a steering action of at least one wheel of the vehicle is supposed to be carried out.

Preferably, the protection margin is chosen such, that a distance is provided between the curb and centers of any of the wheels of the vehicle. This means, that the protection margin is chosen such, that also locations of non-steerable wheels of the vehicle are considered. Accordingly, during a steering action, no interaction between the curb and any of the wheels of the vehicle occurs. Therefore, the lifetimes of non-steerable wheels are elongated as well.

In general, the path planning algorithm is configured to determine a path including a trajectory between a start location and an end location for parking maneuvers. In this regard, the path planning algorithm may be configured to determine trajectories for parking-in as well as for parking-out maneuvers.

Preferably, the path planning algorithm may be comprised within the control device.

In an alternative, the path planning algorithm may also be provided through a cloud-based service. In this case, the control device may be configured to communicate with a cloud server having the path planning algorithm. Then, the control device may communicate all necessary information to the cloud server such that the cloud server is able to determine an altered path making use of the path planning algorithm. Subsequently, the cloud server communicates the altered path to the control device.

In some embodiments, the path planning algorithm makes use of an artificial intelligence-based algorithm. In this regard, at least one neural network may be provided.

Optionally, an artificial intelligence-based algorithm of the path planning algorithm may be configured to be trained based on a cloud-based training procedure. This means that a centralized training of the path planning algorithm may be conducted. Subsequently, a mapping policy for an underlying neural network of the path planning algorithm may be provided through a cloud server to control devices of individual vehicles having the path planning algorithm onboard.

Optionally, the protection margin is based on a tunable calibration and/or a wheel size of the vehicle. The wheel size determines a surface area being occupied by the wheel when performing steering actions. Accordingly, by considering the wheel size, the protection margin can be determined such that an interaction with the curb is prevented. The tunable calibration may be considered such that respective vehicle parameters or external parameters describing the surrounding of the vehicle are considered for determining the protection margin. For example, the size of the parking space may be considered when determining the protection margin. This means that the protection margin may be separately determined for every single parking maneuver. The control device may be in charge of determining the protection margin and passing the protection margin to the path planning algorithm. The size of the parking space may be detected by means of sensors of the vehicle or the environment communicated to the vehicle via vehicle-to-infrastructure communication. In addition, external parameters such as weather conditions may be considered when determining the protection margin. For example, a larger protection margin may be considered if the weather conditions indicate a potentially slippery ground. Also, the tunable calibration may be variable based on a user input. This means that a user may specify a factor influencing the protection margin.

According to some embodiments, the protection margin has a size such that steering of steerable wheels of the vehicle according to the altered path is performed with the steerable wheels being arranged either fully on the curb or fully below the curb. Accordingly, the protection margin is chosen such that an interaction of the wheels with the curb is prevented when steering the wheels. Hence, contact of the wheels or the rims thereof with the curb is obviated.

Optionally, the at least one sensor is configured to detect a torque of a motor (engine's propulsion torque) of the vehicle and a velocity of the vehicle. Preferably, the curb is detected as the propulsion torque exceeds a threshold value without the velocity of the vehicle increasing. This means that the detection of the curb (obstacle) is based on parameter changes of the longitudinal control system of the vehicle without using environmental sensor data in this case. Put differently, the curb is detected upon at least one wheel of the vehicle hitting the curb, i.e. a curb hit. Depending on the sequence of the assisted parking maneuver, it may be determined in certain phases that no speedup or braking is normally planned within that certain phase. For these phases, it may be intended that the traversable obstacle, such as a curb, is determined to be present only based on a variation of the propulsion torque of the motor, without additionally considering or measuring the current velocity of the vehicle. When driving up the curb, an enlarged propulsion torque is required to be provided by the motor of the vehicle due to the weight of the vehicle. By detecting the enlarged propulsion torque outputted by the motor and evaluating the speed of the vehicle, reliable conclusions can be drawn onto the presence of a curb. In this regard, the sensor itself is not required to carry out the determination process. Rather, the sensor provides respective measurement data to the control device which evaluates the received measurement data and determines whether or not a curb is present.

The threshold value of the propulsion torque can be absolutely fixed in one embodiment, for example as a function of the vehicle type or its motor characteristics. In another embodiment, the threshold value can be set relative to the current propulsion torque, for example 10 % above the previous average value during the automatic parking maneuver or the like.

In some embodiments, the sensor may also be configured to detect a steering torque caused by a steering device, such as a steering wheel, or by a steering control configured to provide steering control signals to steering actuators. In addition, the orientation of steerable wheels may be detected. Also, a threshold value of the steering torque may be considered. In a scenario, where the steerable wheels are already in lateral contact with the curb, a further enhancement of the steering torque will not cause any further rotation of the steerable wheels. Therefore, if the threshold value of the steering torque is exceeded without the steerable wheels rotating any further, a curb may be considered to be present accordingly. As a consequence, an altered path of the assisted parking maneuver may be determined based at least in part on the steering torque detected by the sensor.

In addition, depending on the steering torque, the planned path may be determined at least in some aspects, such as with regard to certain portions of the underlying trajectory of the planned path.

Alternatively or cumulatively, a curb may also be detected based on environmental-related sensor data. For example, camera-based sensors may be used to detect a curb prior to at least one wheel of the vehicle hitting the curb. In this regard, the control device may be configured to determine whether or not the curb is located within the planned path.

Preferably, the motor may comprise a combustion engine or an electric engine.

In some embodiments, the altered path of the assisted parking maneuver comprises at least one change of a moving sense of the vehicle from forward to backward or from backward to forward. Here, the moving sense relates to a forward or backward movement of the vehicle. Optionally, the true movement of the vehicle may also comprise a steering action being superposed to the forward or backward movement. By changing the moving sense, maneuvering of the vehicle may be achieved within an effectively reduced surface area. Put differently, less lateral space on the ground is required to reach a desired end location. Therefore, the vehicle may be parked-in or -out with regard to smaller parking spaces.

In some embodiments, a user input may be required to change a moving sense of the vehicle. For example, the user may be required to perform a gear shift. In this regard, the control device may be coupled to a human-machine-interface (HMI) where a respective request for the user to provide a user input can be outputted.

Preferably, a change of the moving sense of the vehicle from forward to backward or from backward to forward is considered according to the altered path with no wheel of the vehicle being in contact with the curb. For example, a curb may be detected prior to a wheel hitting the curb. Then, a change of the moving sense of the vehicle may be considered according to the altered path even prior to a wheel hitting the curb. Accordingly, contact with the curb may even be prevented in some cases.

Optionally, post the detection of a curb being located within the planned path, the method may include the step of determining whether conditions are fulfilled which allow an early change of the moving sense of the vehicle to be carried out. In particular, the determination procedure is performed by the control device. In this regard, sensor data acquired by at least one sensor of the vehicle may be considered by the control device. For example, the control device may consider a position of the vehicle relative to the parking space. This means that an early change of the moving sense of the vehicle may be performed only if a precondition regarding the position of the vehicle relative to the parking space is fulfilled. For example, a center of a rear axle or a front axle of the vehicle may be required to be located within a specific portion of the parking space to allow a change of the moving sense of the vehicle to be performed. Put differently, the vehicle (here the center of the front or the rear axle) is required to be located sufficiently deep inside the parking space for a change of the moving sense of the vehicle to be allowed.

Alternatively or cumulatively, whether or not a change of the moving sense of the vehicle is allowed, may also depend on a free space in front or backwards of the vehicle within the parking space relative to lateral limits encompassing the parking space, such as other vehicles.

In some cases, after detecting a curb being located within the planned path, the altered path may even comprise a trajectory which lets the vehicle fully leaving the parking space and subsequently entering the parking space again making use of a different altered trajectory. The altered trajectory may potentially comprise a different angular relation relative to the curb. By the early change of the moving sense of the vehicle, a contact between the wheels of the vehicle and the curb may possibly be prevented or carried out such that the interaction does not lead to unwanted shortening of the lifetimes of the wheels or the rims thereof.

Optionally, the protection margin is reduced by a reduction factor, if an available parking space cannot be entered or left according to the altered path having the non-reduced protection margin. Entering or leaving the parking space may be considered a superordinate desire of a user of the vehicle. Therefore, the protection margin may be reduced by a reduction factor if a parking maneuver for entering or leaving the parking space would be impossible when the protection margin without the reduction factor would be considered. Hence, the superordinate desire of the user of the vehicle may be served. A respective request may be outputted by the control device in this regard. The reduction may then be based on a respective user input received via an HMI.

In some embodiments, the assisted parking maneuver is proceeded according to the altered path only if an available parking space can be left or entered while considering the protection margin or a reduced protection margin. Otherwise, the assisted parking maneuver may be proceeded according to the planned path. Preferably, a superordinate condition may be considered by the path planning algorithm describing the prevention of a contact between the vehicle and other obstacles limiting the parking space, such as vehicles being parked in front or behind the parking space. Such a contact is to be prevented in any case. Therefore, the contact prevention is a superordinate condition which is included when determining the altered path. If a contact cannot be prevented for the altered path, even when reducing the protection margin, the parking maneuver is consequently not proceeded according to the altered path. Instead, the original planned path may be used for proceeding the parking maneuver. A respective request may be outputted by the control device in this regard. Proceeding based on the planned path may then be based on a respective user input received via an HMI.

Optionally, the assisted parking maneuver is proceeded according to the planned path if an overruling user input is received by the control device using a human-machine-interface. In this regard, the control device may be coupled to an HMI, where a request may be outputted to specify whether or not the parking maneuver is to be proceeded according to the altered path or according to the planned path.

Preferably, the at least one sensor comprises at least one of a torque sensor configured to sense a torque of a motor (engine's propulsion torque) of the vehicle, a camera sensor, an ultrasonic sensor, a radar sensor, and a lidar sensor.

In some embodiments, the torque sensor may also be configured to sense a steering torque. Also, multiple torque sensors may be provided, at least one of which configured to sense a torque of a motor (engine's propulsion torque) of the vehicle and at least one additional of which being configured to sense a steering torque.
Optionally, the HMI comprises a speaker and/or a multimedia device of the vehicle.

In some embodiments, the parking maneuver is terminated if the curb is detected to have a height difference between a lower and an upper height level above a height threshold value. This means that it may be detected that the curb is such high that climbing the curb cannot be securely performed. Put differently, the curb is considered not being traversable. In this regard, the control device may be configured to request a user input whether or not the parking maneuver is to be proceeded. Within the request, optionally the height of the curb may be specified.

Preferably, a height of curb may be detectable by means of a sensor of the vehicle, such as a camera-based sensor.

In some embodiments, an assisted parking maneuver is only terminated after detection of the obstacle that can be driven over if a check of a current position and orientation of the vehicle shows that the current position and orientation of the motor vehicle are suited as end locations of the parking maneuver. The end location is particularly considered to be suitable if a lateral distance, e.g. to adjacent vehicles, does not fall below a minimum distance threshold value. The minimum distance threshold value may depend on, for example, an opening radius of the doors of the vehicle or a distance considered for being sufficient to maneuver vehicles out of the parking space. Accordingly, potential time savings can be achieved if an end location is already reached.

In this regard, a moving sense of the vehicle may optionally be varied from forward to backward or from backward to forward if a check reveals that the present position of the vehicle is not suitable as end location of the parking maneuver. By changing the moving sense of travel, the assisted parking maneuver system can cause the vehicle to perform an additional move, and possibly multiple moves, to change the position and orientation of the vehicle. Hence, the end location of the path may be reached more efficiently even though a reduced lateral space is required.

In some embodiments, the control device may be coupled to a bus system of the vehicle, in particular a CAN-bus system (controller area network). Via the bus system, the control device may receive vehicle related parameters which may be considered during the method.

Preferably, the control device comprises at least one data processing circuit.

According to another aspect, a data processing circuit comprising means for carrying out at least one step of the method as described herein before is provided.

According to yet another aspect, a computer program comprising instructions which, when the computer program is executed by a computer, cause the computer to carry out at least one step of the method as described herein before is provided.

According to even a further aspect, a computer-readable medium comprising instructions which, when executed by a computer, cause the computer to carry out at least one step of the method as described herein before is provided.

According to an additional aspect, a vehicle comprising a parking maneuver system as described herein before, or an parking maneuver system which is operable according to the method as described herein before is provided.

Within the present context, a vehicle may be considered an at least partially electrically or fuel powered vehicle. These vehicles may include, in particular, land vehicles, namely, inter alia, off-road and on-road vehicles such as passenger cars, buses, trucks and other commercial vehicles, which have at least one electric motor or a combustion engine serving to propel the vehicle. Vehicles can be manned or unmanned. In addition to pure electric vehicles (BEV) or pure fuel-based vehicles, hybrid electric vehicles (HEV) and plug-in hybrids (PHEV) may also be included.

All features explained with regard to the various aspects can be combined individually or in (sub)combination with other aspects.

The foregoing aspects and further advantages of the claimed subject matter will become more readily appreciated, as the same become better understood by reference to the following detailed description when taken in conjunction with the accompanying drawings. In the drawings,
- Fig. 1 is a schematic drawing of a vehicle having an assisted parking maneuver system according to an embodiment,
- Fig. 2 is a schematic drawing of a method of operating a vehicle during an assisted parking maneuver according to an embodiment,
- Fig. 3 is a schematic drawing of a method of operating a vehicle during an assisted parking maneuver according to another embodiment,
- Fig. 4 is a schematic drawing of a vehicle performing an assisted parking maneuver,
- Fig. 5 is a schematic drawing of a vehicle performing an assisted parking maneuver, and
- Figs. 6A and 6B are schematic drawings of a vehicle performing assisted parking maneuvers according to embodiments.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. Various modifications to the described embodiments will be readily apparent to those skilled in the art, and the general principles defined herein may be applied to other embodiments and applications without departing from the spirit and scope of the described embodiments. Thus, the described embodiments are not limited to the embodiments shown but are to be accorded the widest scope consistent with the principles and features disclosed herein.

All of the features disclosed hereinafter with respect to the example embodiments and/or the accompanying figures can alone or in any sub-combination be combined with features of the aspects of the present disclosure including features of preferred embodiments thereof, provided the resulting feature combination is reasonable to a person skilled in the art.

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

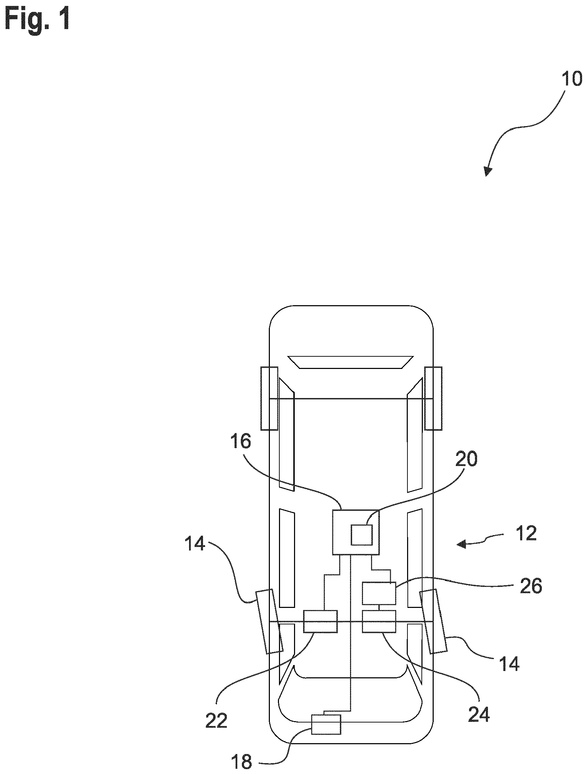

Fig. 1 is a schematic drawing of a vehicle 10 having an assisted parking maneuver system 12 according to an embodiment.

The vehicle 10 comprises two steerable front wheels 14.

The assisted parking maneuver system 12 comprises a control device 16 and at least one sensor 18 coupled with the control device 16. The control device 16 also comprises at least one data processing circuit 20. Optionally, the control device 16 may comprise wireless communication means by which the control device 16 may be coupled to distant components, such as server devices or cloud servers.

The vehicle 10 comprises at least one steer control 22 coupled to the steerable front wheels 14.

The vehicle 10 also comprises at least one motor 24, such as an electric motor, coupled to a front axle in this embodiment. According to this embodiment, the motor 24 is controlled by a combined motor and breaking control unit 26.

The control device 16 is coupled to the steer control 22 and to the combined motor and breaking control unit 26.

Generally, the control device 16 is configured to provide respective control signals based on which a steering angle of the steerable front wheels 14 may be influenced via the steer control 22. Additionally, the control device 16 is also configured to provide control signals to the combined motor and breaking control unit 26, based on which a change of the moving sense and/or the velocity of the vehicle 10 may be initiated.

According to the present embodiment, the at least one sensor 18 is configured to detect a torque provided by the motor 24 and to detect a velocity of the vehicle 10. Optionally the at least one sensor 18 or other sensors (not shown) may additionally be configured to detect environmental-related data with respect to the vehicle 10, such as a surrounding. Put differently, the sensor 18 may be camera-based and inspect a surrounding of the vehicle 10 and may be configured to detect a curb or other traversable obstacles within a certain region surrounding the vehicle 10. The sensor data are provided to the control device 16 which determine whether or not a curb is present and also is configured to determine specific actions, such as an alternate path based thereon.

According to the present embodiment, the control device 16 comprises a path planning algorithm based on which paths of the vehicle 10 for entering or leaving a parking space are determined.

Optionally, the control device 16 may be coupled to a human-machine-interface (HMI). Then, the control device 16 may be configured to output requests via the HMI and to receive user inputs therefrom.

Moreover, the control device 16 may also be coupled to a bus system of the vehicle 10. Via the bus system, for example a CAN bus, the control device 16 may receive vehicle-related parameters, such as a velocity of the vehicle 10. This means that the velocity of the vehicle 10 is not necessarily required to be measured by the sensor 18. Rather, the control device 16 may receive direct information about the velocity of the vehicle 10, for example, from the combined motor and breaking control unit 26.

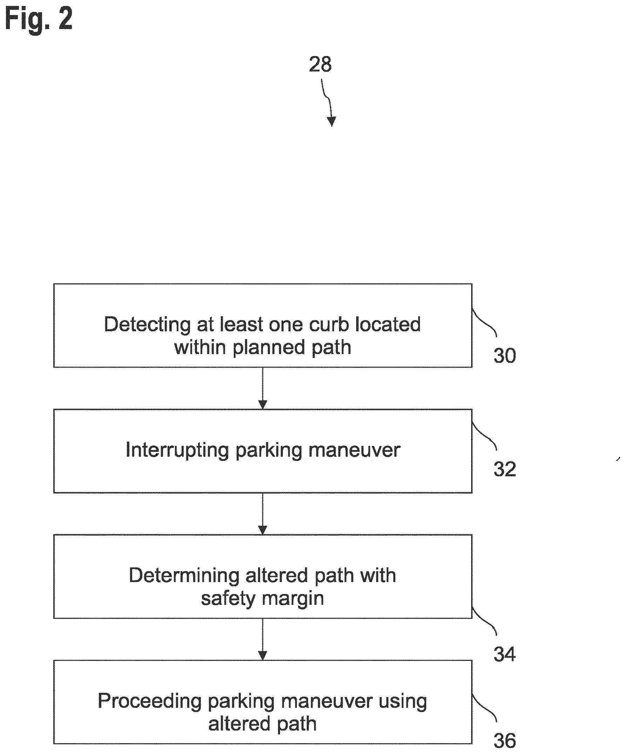

Fig. 2 is a schematic drawing of a method 28 of operating a vehicle 10 during an assisted parking maneuver according to an embodiment.

In step 30, at least one curb being located within the planned path of the assisted parking maneuver is detected using the at least one sensor 18. In this regard, the curb may be detected for example based on at least one wheel of the vehicle 10 hitting the curb. For example, the sensor 18 may detect that the torque outputted by the motor 24 increases while the velocity of the vehicle 10 does not increase. Then, the control device 16 may determine based on the sensor data received from the sensor 18 that a curb is present within the trajectory of the planned path. In an alternative, the sensor 18 may also provide environmental-related data, for example based on a camera detector, which indicates the presence of the curb within the planned path.

Subsequently, in step 32, the assisted parking maneuver according to the planned path is interrupted. In this regard, the control device 16 may provide respective control signals to interrupt the parking maneuver. For example, the control signal may be provided from the control device 16 to the combined motor and breaking control unit 26 which, as a consequence, slows down the motor 24 or activates break devices.

In step 34, an altered path of the assisted parking maneuver is determined using a path planning algorithm. The altered path comprises a protection margin between a location of the curb and set locations at which steering of the steerable wheels 14 is planned. Put differently, based on step 30, the control device 16 is provided with information at which position the curb is located. The control device 16 may then make use of the path planning algorithm to determine an altered path where positions at which steering actions of the steerable wheels 14 are to be carried out, are such that the steerable wheels 14 are not in contact with the curb during the steering actions. The distance between the location of the curb and the locations, at which steering actions are to be performed, is considered by using the protection margin.

In step 36, the assisted parking maneuver is then proceeded according to the altered path. As the altered path comprises a protection margin, steering actions are not performed while a wheel of the vehicle 10 is in contact with the curb. Accordingly, contact between the wheels or the rims thereof with the curb can be prevented. As a consequence, the lifetime of the wheels is elongated.

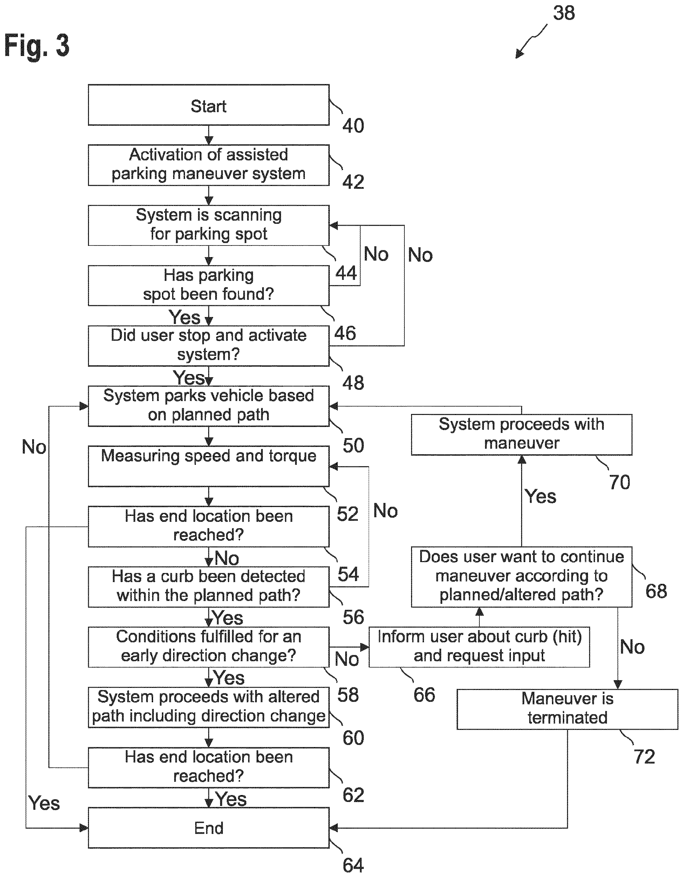

Fig. 3 is a schematic drawing of a method 38 of operating a vehicle 10 during an assisted parking maneuver according to another embodiment. The method 38 comprises several steps which are optional to the method. However, the method 38 represents a more sophisticated approach for an assisted parking maneuver.

In step 40, the method 38 is started.

In step 42, the assisted parking maneuver system 12 is activated, for example, based on a user input via an HMI.

In step 44, the assisted parking maneuver system 12 is scanning for available parking spots. In this regard, the parking spot may represent a parallel parking spot being oriented substantially in parallel to a passageway of a road. In an alternative, the parking spot may also comprise an angle relative to the passageway of the road. In some embodiments, the parking spot may also represent a perpendicular parking spot being oriented at an angle of about 90° relative to the passageway. Scanning for available parking spots may be at least partially based on sensor data acquired by means of the at least one sensor 18. For example, camera-based sensors 18 may be applied in this regard.

In step 46, it is evaluated whether or not a suitable parking spot has been found. In this regard, the control device 16 may consider vehicle-related parameters, such as the vehicle dimensions, for determining whether or not a specific parking spot is suitable for the vehicle 10. Optionally, the vehicle-related parameters may be stored within a storage device coupled to the control device 16. Cumulatively or alternatively, the control device 16 may also be coupled to a bus system of the vehicle 10 and receive vehicle-related parameters therefrom. In some instances, the control device 16 may also receive vehicle-related parameters from a cloud server.

If in step 46 the control device 16 determines that a detected parking spot is suitable for the vehicle 10, the method 38 proceeds to step 48. Otherwise, the method 38 returns to step 44.

In step 48, the control device 16 determines whether or not the vehicle 10 has stopped such that the assisted parking maneuver may actually be carried out in view of the parking spot determined to be suitable for the vehicle 10 in step 46. If the vehicle 10 has stopped, the method 38 proceeds to step 50. Otherwise, the method 38 returns to step 44.

In step 50, the assisted parking maneuver system 12 guides the vehicle 10 into the parking spot.

Subsequently, in step 52, the assisted parking maneuver system 12 makes use of sensor data acquired by the at least one sensor 18. In this embodiment, the sensor 18 is used to measure a propulsion torque outputted by the motor 24 and a velocity of the vehicle 10.

In step 54, the assisted parking maneuver system 12 evaluates whether or not an end location according to a trajectory of the planned path has already been reached. In this regard, the control device 16 is applied. If the end location is not yet reached, the method 38 proceeds to step 56. If the end location is indeed already reached, the method 38 proceeds to the end at step 64.

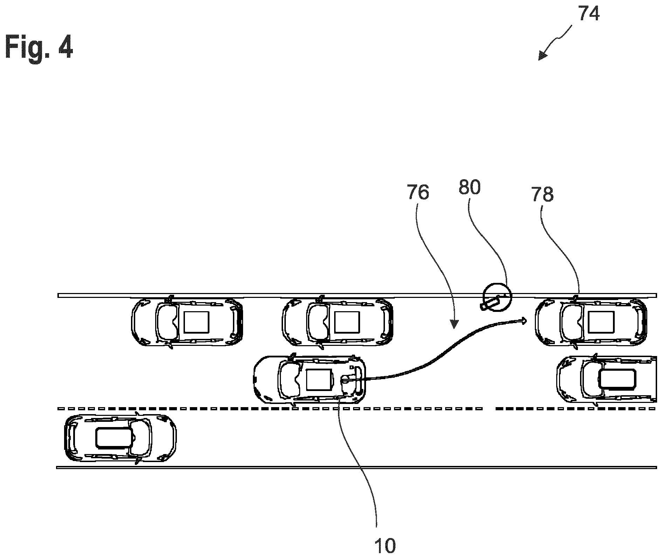

In step 56, the assisted parking maneuver system 12 determines based on the control device 16 whether or not the curb has been detected within the planned path. This determination procedure is based on the measurement data provided by the at least one sensor 18. In this regard, Fig. 4 is a schematic drawing of a vehicle 10 performing an assisted parking maneuver 74 where a curb hit is detected. According to the planned path a vehicle 10 is moved inside a parking slot 76 by the assisted parking maneuver system 12. However, an unintentional curb hit, generally indicated by the circle 80, occurs between a wheel of the vehicle 10 and a curb 78 limiting the parking space 76. As the curb 78 provides a height difference, the sensor 18 may detect an increase of the propulsion torque outputted by the motor 24 while the velocity of the vehicle 10 does not increase. Therefore, reliable detection of the curb 78 is ensured. If a curb has been detected to be located within the planned path, the method 38 proceeds to step 58. Otherwise, the method 38 returns to step 52.

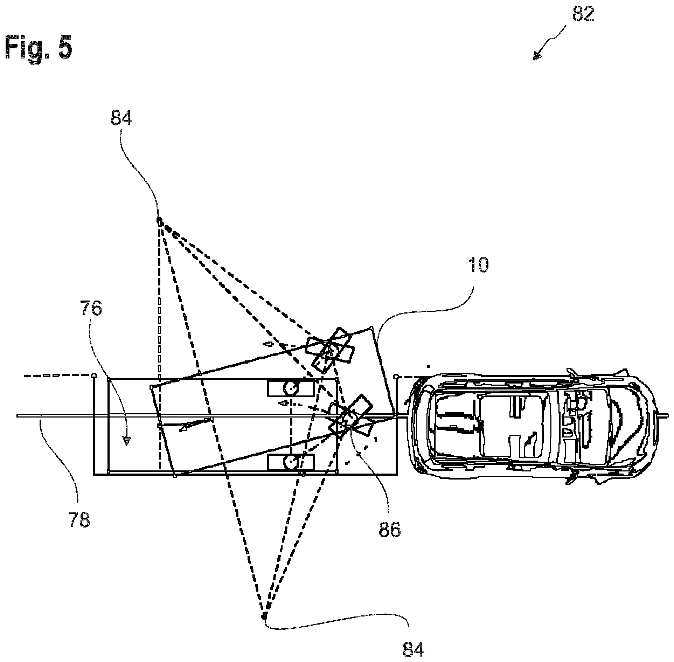

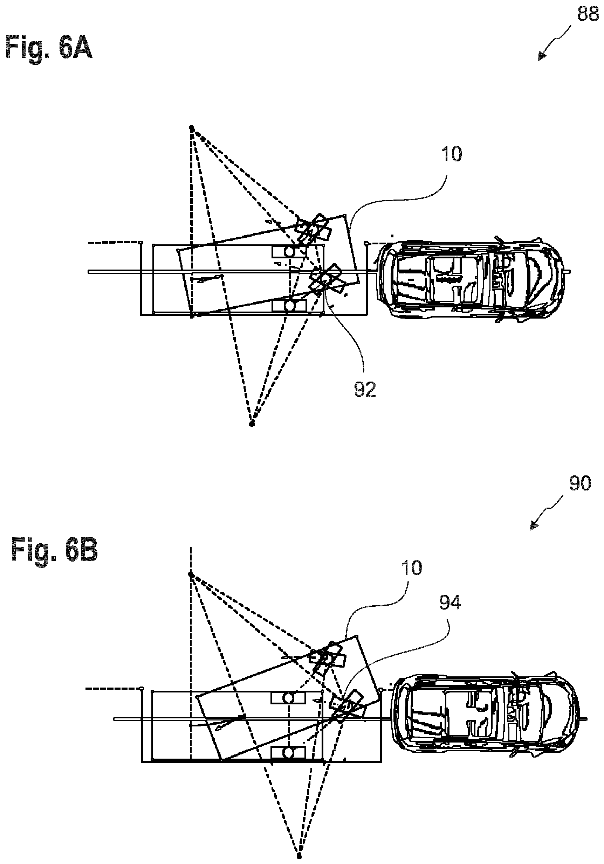

In step 58, the assisted parking maneuver system 12 makes use of the control device 16 to determine whether the conditions for an early change of the moving sense of the vehicle 10 are fulfilled (early direction change). In this regard, the exact position of the vehicle 10 with respect to the parking spot may be considered. The position of the vehicle 10 may be determined based on the position of a center of a front or rear axle of the vehicle 10. In addition or in an alternative, a clearance in front of the vehicle 10 or backwards of the vehicle 10 may be included within the determination procedure. Moreover, also vehicle-related parameters, such as a velocity thereof, may be considered. If the conditions for an early change of the moving sense of the vehicle 10 are fulfilled, the method 38 proceeds to step 60. In this regard, an altered path is determined in step 58 using a path planning algorithm of the control device 16. The altered path includes a protection margin between locations at which steering actions of the steerable wheels 14 of the vehicle 10 are to be conducted and a location of the detected curb. In this regard, Fig. 5 is a schematic drawing of a vehicle 10 performing an assisted parking maneuver according to a planned path 82. The planned path 82 comprises locations 86 at which steering actions about certain centres 84 of turning circles are to be performed which overlap with a location of the curb 78. This means that the steerable wheels 14 of the vehicle 10 would perform steering actions while being in contact with the curb 78. This configuration may for example be detected by an appropriately designed sensor 18. For example, the sensor 18 may be configured to sense a steering torque applied to the steerable wheels 14 by a steering device or steering actuator. In addition, the orientation of the steerable wheels 14 may be detected by the sensor 18 or an additional sensor. If the steerable wheels 14 are already in lateral contact with the curb 78, an enhancement of the steering torque does not cause any further rotation of the steerable wheels 14. Therefore, if a predetermined steering torque threshold value is exceeded without a further rotation of the steerable wheels 14, the sensor data of the sensor 18 may be used to consider that a curb 78 is present. This may potentially lead to contact of the wheels or the rims thereof with the curb 78. Such a trajectory may be originally planned according to the originally planned path 82. However, according to the altered path, a protection margin is considered. In this regard, Figs. 6A and 6B are schematic drawings of a vehicle 10 performing assisted parking maneuvers according to altered paths 88, 90 according to embodiments of the present disclosure. The protection margin ensures that respective locations 92, 94, at which steering actions of the steerable wheels 14 of the vehicle 10 are to be carried out, do not overlap with locations of the curb 78. More particularly, according to the altered path 88, the location 92, at which steering actions are to be carried out, are located above the curb 78 (behind the curb 78). According to the altered path 90 the location 94, at which steering actions are to be carried out, are located below the curb 78 (prior to the curb 78). Consequently, an interaction between the steerable wheels 14 being steered and the curb 78 is prevented based on the protection margin.

If the conditions for an early change of the moving sense of the vehicle 10 are not fulfilled, the method 38 proceeds to step 66.

In step 60, the assisted parking maneuver system 12 proceeds the parking maneuver making use of the altered path 88, 90. Optionally, the altered path includes a change of the moving sense of the vehicle 10.

In step 62, it is evaluated whether or not an end location of the trajectory of the altered path 88, 90 has been reached. If this is the case, the method 38 proceeds to step 64 and ends. If an end location of the altered path 88, 90 has not yet been reached, the method 38 returns to step 50.

In step 66, the assisted parking maneuver system 12 optionally outputs a notification via an HMI and informs a user about the curb being located within the planned path 82. This may also include a notification of an already occurred curb hit if the curb was detected based on an enlarged propulsion torque outputted from the motor 24 while the velocity of the vehicle 10 did not increase.

Subsequently, in step 68, the assisted parking maneuver system 12 evaluates whether or not the user wants to continue the parking maneuver according to the planned path 82 or an altered path 88, 90 or at all. In this regard, the control device 16 may output via the HMI several possible trajectories according to which the parking maneuver may be continued, such as the planned path 82 or at least one altered path 88, 90. If the user wants to continue the parking maneuver according to a specific path, the method 38 proceeds to step 70. Otherwise, the assisted parking maneuver system 12 determines that the parking maneuver is to be terminated according to step 72. Subsequently to step 72, the method 38 terminates at step 64.

In step 70, the method 38 proceeds with the parking maneuver based on the user input received in step 68. This means that the parking maneuver is proceeded according to a path as specified by the user input, for example, the planned path 82 or an altered path 88, 90. Subsequently, the method 38 proceeds to step 50.

As a consequence, a method 38 is provided which considers multiple different information, such as sensor data or user inputs to conduct a parking maneuver as desired by the user. Additionally, the method 38 ensures that a lifetime of the wheels is elongated.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry such as the control device, and the sensor includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like in, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

Although the disclosure has been illustrated and described with respect to one or more implementations, equivalent alterations and modifications will occur to others skilled in the art upon the reading and understanding of this specification and the annexed drawings. In addition, while a particular feature of the disclosure may have been disclosed with respect to only one of several implementations, such feature may be combined with one or more other features of the other implementations as may be desired and advantageous for any given or particular application.

## Claims

1. A method (28, 38) of operating a vehicle (10) during an parking maneuver, the vehicle (10) comprising at least one sensor (18), steerable wheels (14), and a control device (16) which is connected to the sensor (18), wherein the control device (16) is at least configured to provide a control signal for steering the steerable wheels (14) according to a set orientation following a planned path (82) of the parking maneuver, the method (28, 38) comprising at least the steps of:
- detecting at least one curb (78) being located within the planned path (82) of the parking maneuver using the at least one sensor (18) and/or a vehicle-to-infrastructure communication,
- interrupting the parking maneuver according to the planned path (82),
- determining an altered path (88, 90) of the parking maneuver using a path planning algorithm, wherein the altered path (88, 90) comprises a protection margin between a location of the curb (78) and set locations (92, 94) at which steering of the steerable wheels (14) is planned, and
- proceeding the parking maneuver according to the altered path (88, 90).

2. The method (28, 38) of claim 1, wherein the protection margin is based on a tunable calibration and/or a wheel size of the vehicle (10).

3. The method (28, 38) of claim 1 or 2, wherein the protection margin has a size such that steering of steerable wheels (14) of the vehicle (10) according to the altered path (88, 90) is performed with the steerable wheels (14) being arranged either fully on the curb (78) or fully below the curb (78).

4. The method (28, 38) of any one of the preceding claims, wherein the at least one sensor (18) is configured to detect a propulsion torque of a motor (24) of the vehicle (10) and a velocity of the vehicle (10), and wherein the curb (78) is detected as the propulsion torque exceeds a threshold value without the velocity of the vehicle (10) increasing.

5. The method (28, 38) of any one of the preceding claims, wherein the altered path (88, 90) of the parking maneuver comprises at least one change of a moving sense of the vehicle (10) from forward to backward or from backward to forward.

6. The method (28, 38) of any one of the preceding claims, wherein the protection margin is reduced by a reduction factor, if an available parking space (76) cannot be entered or left according to the altered path (88, 90) having the non-reduced protection margin.

7. The method (28, 38) of claim 6, wherein the parking maneuver is proceeded according to the altered path (88, 90) only if an available parking space (76) can be left or entered while considering the protection margin or a reduced protection margin, and wherein the parking maneuver is proceeded according to the planned path (82) otherwise.

8. The method (28, 38) according to any one of the preceding claims, wherein the parking maneuver is proceeded according to the planned path (82) if an overruling user input is received by the control device (16) using a human-machine-interface.

9. An parking maneuver system (12) for a vehicle (10), the vehicle (10) comprising steerable wheels (14), wherein the parking maneuver system (12) comprises at least one sensor (18) and a control device (16) which is connected to the sensor (18), wherein the control device (16) is at least configured to provide a control signal for steering the steerable wheels (14) according to a set orientation following a planned path (82) of the parking maneuver, wherein the system (12) is configured to:
- detect at least one curb (78) being arranged within the planned path (82) of the parking maneuver using the at least one sensor (18) and/or a vehicle-to-infrastructure communication,
- interrupt the parking maneuver according to the planned path (82) using the control device (16),
- determine an altered path (88, 90) of the parking maneuver using a path planning algorithm, wherein the altered path (88, 90) comprises a protection margin between a location of the curb (78) and set locations (92, 94) at which steering of the steerable wheels (14) is planned, and
- proceed the parking maneuver according to the altered path (88, 90) using the control device (16).

10. A vehicle (10) comprising an parking maneuver system (12) according to claim 9, or an parking maneuver system (12) which is operable according to the method (28, 38) of any one of the claims 1 to 8.
